# EUROPÄISCHE PATENTSCHRIFT

(11) **EP 0 452 533 B1**
(45) Veröffentlichungstag und Bekanntmachung des Hinweises auf die Patenterteilung: **26.10.1994**
(21) Anmeldenummer: 90107603.4
(22) Anmeldetag: 21.04.1990
(51) Int. Cl.: B60N 2/00, A47C 7/74, B60H 1/00

(54) **Anordnung von einer oder mehreren Anschlussauflagen für auf der folienkaschierten Innenseite von Bezugsstoffen angebrachten, durch verschweisste oder verklebte weitere Folien abdichtend verbundene elektrische Widerstandsheizung**
Arrangement of one or more connection plates for an electric heating element, which is secured on the inner side of a film-coated covering fabric, and securely fixed by welding or bonding with a supplementary sheet
Positionnement d'une ou de plusieurs plaques de connexion pour un chauffage par résistance électrique appliquée sur la face intérieure du revêtement recouverte d'une feuille et maintenue en place de manière étanche par soudage et collage à l'aide d'une feuille supplémentaire

(43) Veröffentlichungstag der Anmeldung: 23.10.1991
(73) Patentinhaber: I.G. Bauerhin GmbH elektro-technische Fabrik, D-63584 Gründau (DE)
(72) Erfinder: Altmann, Dieter, D-6466 Gründau 1 (DE); Haupt, Eberhard, D-6466 Gründau 2 (DE)
(74) Vertreter: Müller-Wolff, Thomas, Dipl.-Ing.

(56) Entgegenhaltungen:
- EP-A- 0 126 162
- EP-A- 0 192 155
- EP-A- 0 331 762
- FR-A- 2 041 047
- FR-A- 2 410 412

## Beschreibung

Die Erfindung betrifft eine Anordnung von einer oder mehreren Ahschlußauflagen für auf der folienkaschierten Innenseite von Bezugsstoffen angebrachten, durch verschweißte oder verklebte weitere Folien abdichtend verbundenen elektrischen Widerstandsheizung, die der Sitz- und/oder der Rückenlehnenfläche zugeordnet sind, insbesondere für die Ausbildung der Sitz- und Lehnenteile von Fahrzeugsitzen, bestehend aus einer Anschlußplatte und einem Aufbaublock zur Aufnahme und Führung eines Anschlußkabels, zur Aufnahme eines Thermostates und für die Fixierung der Anschlüsse der Heizleiter auf der Innenseite des kunststoffkaschierten Bezugsstoffes, der Abdeckfolie für die aufgelegten Heizleiter, wobei das Anschlußkabel über eine Zugentlastung und einen Schrumpfschlauch einschließlich einer Masseleitung mit den Thermostaten und den Hetzleitern verbunden ist.

Durch die deutsche Patentanmeldung DE-A-3 505 652 wurde ein Verfahren zur Herstellung einer Sitzbeheizung bekannt, die für die Anordnung auf Schaumpolsterkernen sich aufgrund ihrer hohen Elastizität besonders eignet.

Aus der EP-A-0 331 762 ist eine Anordnung von einer oder mehreren Anschlußauflagen für auf der folienkaschierten Innenseite von Bezugsstoffen angebrachten, durch verschweißte oder verklebte weitere Folien abdichtend verbundene elektrische Widerstandsheizungen bekannt, die der Sitz- und/oder der Rückenlehnenfläche zugeordnet sind, insbesondere für die Ausbildung des Sitz- und Lehnenteile von Fahrzeugsitzen. Die bekannte Anordnung zeigt ein Aufnahmeteil zur Aufnahme und Führung eines Anschlußkabels, zur Aufnahme von Thermostaten und für die Fixierung der Anschlüsse der Heizleiter auf der Innenseite eines kunststoffkaschierten Bezugsstoffes. Das Anschlußkabel ist über eine Zugentlastung und einen Schrumpfschlauch einschließlich der Masseleitung mit einem Thermostaten und den Heizleitern verbunden.

Nach dieser bekannten Anordnung, die aus einer Anschlußplatte und einem Aufbaublock besteht, ist der Aufnahmeteil aus einem Schaumstoff oder einem anderen elastischen Stoff gebildet. Der vorbereitete Bezugsstoff ist mit seiner Sichtseite auf der Negativform des Sitz- oder Lehnenteils anliegend eingebracht, wobei das verbleibende Restvolumen mit Polsterschaumstoff verfüllt ist. Das obenerwähnte Dokument zeigt die Merkmale des Oberbegriffs des Anspruchs 1.

Bei der bekannten Anordnungen treten Probleme bei der kontinuierlichen oder halbkontinuierlichen Fertigung auf insofern, als nicht gleichzeitig beheizte und unbeheizte Bezüge verarbeitet werden können. Ferner legen sich die Anschlüsse auf den Bezugsstoff auf und bilden dort je nach Verlauf des Aushärtevorganges harte Stellen, die an der Sitzoberfläche spürbar sind und auch ggfs. zu Bruchbildungen führen können.

Aufgabe der vorliegenden Erfindung ist es daher, eine Anordnung der eingangs genannten Art derart auszubilden, daß eine kontinuierliche oder halbkontinuierliche Fertigung gleichzeitig mit unbeheizten Bezügen durchführbar ist und dabei die Anschlüsse so zu positionieren sind, daß diese an der Oberfläche des Bezuges nicht spürbar sind, sich nicht verdrehen und damit keine Heizleiterkreuzungen bilden können, so daß sich bei dem durch Formstempel vorgenommenen Andrücken des Bezugsstoffes in eine Vakuumform nur einwandfreie, lediglich nach innen gerichtete, wenig ausgeprägte Konturen bilden können und somit eine sichere Platzierung der Schaumstoffronden an vorgesehener Lage ohne Kollision mit den Andrückwerkzeugen zu ermöglichen.

Diese Aufgabe wird durch die im Hauptanspruch angegebenen Merkmale gelöst.

Die Anordnung ermöglicht es, daß beidseitig folienkaschierte Schaumstoffronden 5 in der durch die Lage der Heizleiter 2 definierten Ebene angeordnet sind zur Aufnahme und Führung eines Anschlußkabels 3, zur Aufnahme der Thermostate 4 und für die Fixierung der Anschlüsse der Heizleiter 2 auf der Innenseite des kunststoffkaschierten Bezugsstoffes 1 der Abdeckfolie für die aufgelegten Heizleiter 2, wobei das Anschlußkabel 3 über eine Zugentlastung 6 und einem Schrumpfschlauch 7 einschließlich einer Masseleitung mit dem Thermostaten und den Heizleitern verbunden ist, sowie daß die Distanz zwischen der Innenseite des Bezugsstoffes 1, d.h. zwischen dessen kaschierter Fläche, durch die Schaumstoffronde 5, die aus einem Schaumstoff oder einem anderen elastischen Stoff gebildet und an ihren beiden Enden befestigt ist, eingestellt wird und daß der so vorbereitete Bezugsstoff mit seiner Sichtseite der Negativform des Sitz- oder Lehnenteils anliegend eingebracht und das verbleibende Restvolumen mit Polsterschaumstoff verfüllt ist.

Durch diese Ausbildung wird gewährleistet, daß der Thermostat in noch ausreichendem Abstand zwischen der Innenseite des kaschierten Bezugsstoffes und der Heizleiter auf einer elastischen Schaumstoffronde angeordnet sind, wobei es zweckmäßig ist, daß die Ronde dasselbe elastische Verhalten wie der Polsterschaumstoff aufweist. Damit wird gewährleistet, daß beim Ausschäumen der Form und bei der späteren Belastung des Polsterteiles keine wesentlich unterschiedlichen Beanspruchungen auftreten und immer ein ausreichender Restabstand zu den Anschlüssen der Heizleiter gegeben ist.

Die unbelastete Höhe der verwendeten elastischen Schaumstoffronden liegt zwischen 2 und 5 mm. Um ein sattes Einbringen dieser Schaumstoffronden in die Schaumstoffauflage des Polsterstoffes zu erreichen, weisen diese eine Grundfläche gleicherbleibender Dicke und Stärke auf, die dem der Schaumstoffauflage entspricht. Dadurch können die Ronden praktisch nicht auftragen und sich nicht im Bezugsstoff abprägen.

In vorteilhafter Ausgestaltung der erfindungsgemäßen Anordnung werden die Anschlüsse für die Heizleiter 2 auf der Innenseite der zum Bezugsstoff 1 gerichteten Schaumstoffronde 5 auf der Seite des Anschlußkabels 3 zur Zugentlastung 6 hin so geführt, daß bei Zug an dem Anschlußkabel 3 die Anschlüsse für die Heizleiter 2 entlastet bleiben.

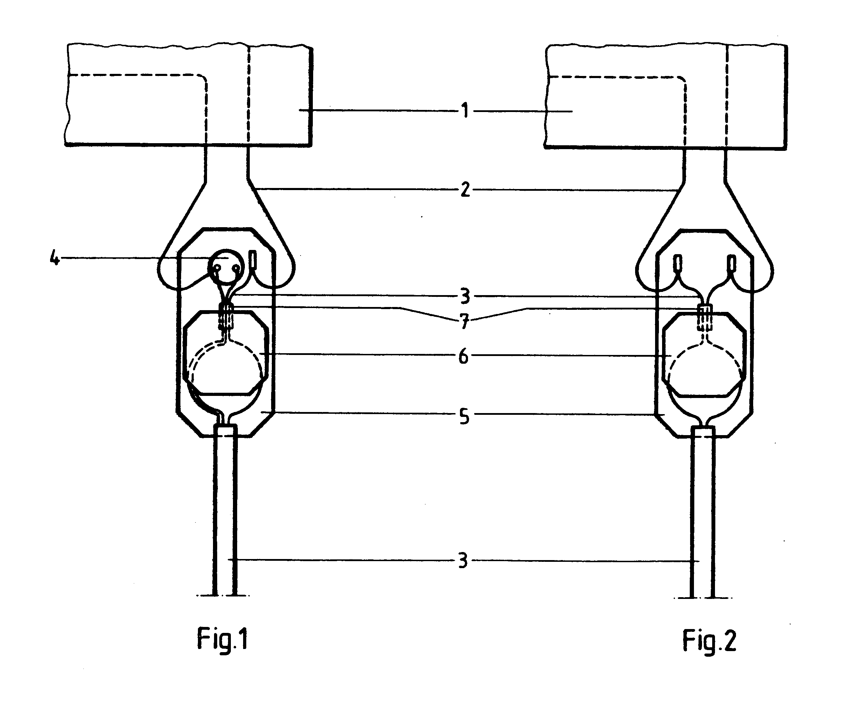

## Patentansprüche

1. Anordnung von einer oder mehreren Anschlußauflagen für auf der folienkaschierten Innenseite von Bezugsstoffen (1) angebrachten, durch verschweißte oder verklebte weitere Folien abdichtend verbundenen elektrischen Widerstandsheizung, die der Sitz- und/oder der Rückenlehnenfläche zugeordnet sind, insbesondere für die Ausbildung der Sitz- und Lehnenteile von Fahrzeugsitzen, bestehend aus einer Anschlußplatte und einem Aufbaublock zur Aufnahme und Führung eines Anschlußkabels (3), zur Aufnahme eines Thermostates (4) und für die Fixierung der Anschlüsse der Heizleiter (2) auf der Innenseite des kunststoffkaschierten Bezugsstoffes (1), der Abdeckfolie für die aufgelegten Heizleiter, wobei das Anschlußkabel (3) über eine Zugentlastung (6) und einen Schrumpfschlauch (7) einschließlich einer Masseleitung mit den Thermostaten und den Heizleitern verbunden ist,
dadurch gekennzeichnet,
daß die Anschlußplatte als beidseitig folienkaschierte Schaumstoffronden (5) ausgebildet ist,
daß eine oder mehrere Schaumstoffronden (5) in einer durch die Lage der Heizleiter (2) definierten Ebene angeordnet sind und
daß die Schaumstoffronden (5) zwischen zwei Folienschichten, die als Abdeckung für den Heizleiter (2) dienen, eingebettet sind.

2. Anordnung nach Anspruch 1,
dadurch gekennzeichnet,
daß die unbelastete Höhe der Schaumstoffronde (5) zwischen 2 und 5 mm beträgt, wobei die elastische Schaumstoffronde (5) eine Grundfläche gleichbleibender Stärke und dasselbe elastische Verhalten wie der Polsterschaumstoff aufweist.

3. Anordnung nach einem der vorhergehenden Ansprüche,
dadurch gekennzeichnet,
daß die Anschlüsse für die Heizleiter (2) auf der Innenseite der zum Bezugsstoff (1) gerichteten Schaumstoffronde (5) auf der Seite des Anschlußkabels (3) zur Zugentlastung in Ringform geführt ist und daß bei Zug an dem Anschlußkabel (3) die Anschlüsse für die Heizleiter (2) entlastet bleiben.

## Claims

1. Arrangement of one or more connection supports for electrical resistance heaters which are mounted on the film-coated inner surface of cover materials (1) and connected in a sealing manner by further welded or glued films, which heaters are associated with the seat and/or the backrest surface, in particular for forming the seat and backrest parts of motor vehicle seats, consisting of a connection plate and a mounting unit for holding and guiding a connection cable (3), for holding a thermostat (4) and for fixing the connections of the heating conductors (2) to the inner surface of the plastic-coated cover material (1), the covering film for the positioned heating conductors, the connection cable (3) being connected to the thermostats and the heating conductors via a strain relief (6) and a shrink-on sleeve (7), including an earth wire,
characterised in
that the connection plate is formed as circular foam blanks (5) which are film-coated on both sides,
that one or more circular foam blanks (5) is/are arranged in a plane which is defined by the position of the heating conductors (2), and
that the circular foam blanks (5) are embedded between two film layers serving as a covering for the heating conductor (2).

2. Arrangement according to claim 1,
characterised in
that the unloaded height of the round foam blank (5) is between 2 and 5 mm, the elastic round foam blank (5) having a basic area of a uniform thickness and exhibiting the same elastic behaviour as the upholstery foam.

3. Arrangement according to one of the preceding claims,
characterised in
that the connections for the heating conductors (2) are guided towards the strain relief in the form of a ring on the inner surface of the circular foam blank (5) facing the cover fabric (1) on the side of the connection cable (3), and that the connections for the heating conductors (2) remain relieved when the connection cable (3) is pulled.

## Revendications

1. Agencement d'une ou de plusieurs de couches de raccordement pour un chauffage ohmique, monté en face intérieure, scellée en feuille, de matières de revêtement (1), relié de manière étanche au moyen d'autres feuilles soudées ou collées, ces feuilles étant associées à la face du siège et/ou du dossier, en particulier pour la réalisation des parties de siège et de dossier de sièges pour véhicules, composées d'une plaque de raccordement et d'un bloc de montage pour loger et guider un câble de raccordement (3), afin de loger un thermostat (4) et de fixer le branchement des conducteurs chauffants (2) sur la face intérieure de la matière de revêtement (1) scellée par la matière synthétique, de la feuille de recouvrement destinée aux conducteurs chauffants posés, le câble de raccordement (3) étant relié aux thermostats et aux conducteurs chauffants, au moyen d'une décharge de traction (6) et d'une gaine rétractable (7), ainsi que d'un conducteur de masse, caractérisé en ce que la plaque de raccordement est réalisée sous forme de flans circulaires (5) en matière alvéolaire, scellés en feuille sur les deux faces,
en ce qu'un ou plusieurs flans circulaires (5) en matière alvéolaire sont disposés dans un plan défini par la position des conducteurs chauffants (2), et
en ce que les flans circulaires (5) en matière alvéolaire, situés entre deux couches de feuille, sont noyés en faisant office de recouvrement pour le conducteur chauffant (2).

2. Agencement selon la revendication 1, caractérisé en ce que la hauteur du flan circulaire (5) en matière alvéolaire, à l'état non chargé, se situe dans la plage comprise entre 2 et 5 mm, le flan circulaire (5) en matière alvéolaire, élastique, a une surface de base d'épaisseur constante et présente le même comportement élastique que la matière alvéolaire du rembourrage.

3. Agencement selon l'une des revendications précédentes, caractérisé en ce que les raccordements des conducteurs chauffants (2) sur la face intérieure du flan circulaire (5) en matière alvéolaire, tourné vers la matière de revêtement, sont guidés, avec une forme annulaire, du côté du câble de raccordement (3), en vue d'une décharge de traction et en ce qu'en cas de traction sur le câble de raccordement (3), les raccordements des conducteurs chauffants (2) restent non chargés.
